# EUROPÄISCHE PATENTANMELDUNG

(11) **EP 4 802 883 A1**
(43) Veröffentlichungstag der Anmeldung: **09.09.2026**
(21) Anmeldenummer: 25162041.5
(22) Anmeldetag: 06.03.2025
(51) Int. Cl.: A01K 1/02

(54) **BEFESTIGUNGSVORRICHTUNG FÜR EINE TRANSPORTBOX**

(71) Anmelder: Consalides BVBA, 8020 Hertsberge (BE)
(72) Erfinder: Destrooper, Bert, 8020 Hertsberge (BE)
(74) Vertreter: Vossius & Partner Patentanwälte Rechtsanwälte mbB

(57) **Zusammenfassung**

Die Erfindung betrifft eine Befestigungsvorrichtung (56) zum Befestigen einer Transportbox (58), bevorzugt einer Transportbox (58) für Haustiere, an einer Isofix-Einrichtung eines Fahrzeugsitzes, wobei die Befestigungsvorrichtung (58) aufweist: eine Grundvorrichtung (10) aufweisend eine Isofix-Platte (12) mit einem Isofix-Befestigungsabschnitt (14) zum Befestigen der Isofix-Platte (12) an der Isofix-Einrichtung des Fahrzeugsitzes und eine mit der Isofix-Platte (12) verbundene Montageplatte (18), die eine Montagefläche (20) und mindestens einen von der Montagefläche (20) vorspringenden Rastabschnitt aufweist; und eine in die Transportbox (58) einführbare und/oder einlegbare Bodenplatte (40), die mit der Montageplatte (18) an der Montagefläche (20) lösbar verbindbar ist, wobei die Bodenplatte (40) mindestens eine Ausnehmung (46) aufweist, die dazu ausgebildet ist, im verbundenen Zustand von Montageplatte (18) und Bodenplatte (40) den mindestens einen Rastabschnitt derart aufzunehmen, dass eine Verdrehsicherung zwischen der Bodenplatte (40) und der Montageplatte (18) vorhanden ist.

## Beschreibung

Die vorliegende Erfindung betrifft eine Befestigungsvorrichtung zum Befestigen einer Transportbox, beispielsweise einer Transportbox für Haustiere, an einer Isofix-Einrichtung eines Fahrzeugsitzes. Die vorliegende Erfindung betrifft ferner eine Transportvorrichtung zum Transportieren von Gütern, beispielsweise von Haustieren, in einem Fahrzeug mit Isofix-Einrichtung. Die vorliegende Erfindung betrifft ferner ein Verfahren zur Montage oder Demontage einer Transportbox, beispielsweiser einer Transportbox für Haustiere, an bzw. von einer Isofix-Einrichtung eines Fahrzeugsitzes.

In Fahrzeugen werden Haustiere oder andere Ladegüter häufig in speziell angefertigten Transportboxen transportiert. Diese Boxen werden entweder über aufwendige Gurtanordnungen an der Rückenlehne des Beifahrersitzes und/oder der Rücksitzbank befestigt oder auf separat erhältlichen Isofix-Basisstationen (auch Isofix-Dockingstation genannt) platziert, die ihrerseits mit einer Isofix-Einrichtung des Fahrzeugsitzes verbunden sind. Nicht selten müssen die Transportboxen zusätzlich durch Gurte gegen Verdrehen und/oder Verrutschen gesichert werden. Eine Mitnahme der Transportbox und/oder ein Wechsel der Transportbox von einem Fahrzeug zu einem anderen Fahrzeug ist häufig mit größerem Aufwand verbunden. Ein weiteres Problem stellen die zahlreichen Sitzneigungen, Sitztiefen und/oder Platzverhältnisse dar, die meist fahrzeugspezifisch sind und den Einbau der Transportbox erschweren. Nicht selten muss eine speziell für das Fahrzeug passende Kombination aus Transportbox und Isofix-Basisstation gefunden werden und/oder wird die Transportbox in einer nicht optimalen Position im Fahrzeug befestigt.

Aufgabe der vorliegenden Erfindung ist es daher, eine Befestigungsvorrichtung zum Befestigen einer Transportbox, beispielsweise einer Transportbox für Haustiere, bereitzustellen, die leicht, flexibel und komfortabel an einer Isofix-Einrichtung eines Fahrzeugsitzes befestigbar ist. Ferner ist es eine Aufgabe der vorliegenden Erfindung, eine Transportvorrichtung zum Transportieren von Gütern, beispielsweise von Haustieren, in einem Fahrzeug mit Isofix-Einrichtung bereitzustellen, wobei die Transportvorrichtung beispielweise auch eine Mitnahme der Transportbox und/oder einen Wechsel von einem Fahrzeug zu einem anderen Fahrzeug erleichtern soll, was inbesondere beim Transport von Haustieren von Vorteil ist. Weiter ist es eine Aufgabe der vorliegenden Erfindung, ein Verfahren zur Montage oder Demontage einer Transportbox, beispielsweiser einer Transportbox für Haustiere, an bzw. von einer Isofix-Einrichtung eines Fahrzeugsitzes anzugeben.

Diese und andere Aufgaben, die durch Lesen der vorliegenden Beschreibung offensichtlich werden, werden durch die Gegenstände der unabhängigen Ansprüche gelöst. Bevorzugte Ausgestaltungen sind in den abhängigen Ansprüchen angegeben.

Gemäß einem ersten Aspekt der vorliegenden Erfindung wird eine Befestigungsvorrichtung zum Befestigen einer Transportbox, beispielsweise einer Transportbox für Haustiere, an einer Isofix-Einrichtung eines Fahrzeugsitzes bereitgestellt. Die Befestigungsvorrichtung weist auf: eine Grundvorrichtung aufweisend eine Isofix-Platte mit einem Isofix-Befestigungsabschnitt zum Befestigen der Isofix-Platte an der Isofix-Einrichtung des Fahrzeugsitzes und eine mit der Isofix-Platte verbundene Montageplatte, die eine Montagefläche und mindestens einen von der Montagefläche vorspringenden Rastabschnitt aufweist. Die Befestigungsvorrichtung weist ferner auf: eine in die Transportbox einführbare und/oder einlegbare Bodenplatte, die mit der Montageplatte an der Montagefläche lösbar verbindbar ist, wobei die Bodenplatte mindestens eine Ausnehmung aufweist, die dazu ausgebildet ist, im verbundenen Zustand von Montageplatte und Bodenplatte den mindestens einen Rastabschnitt derart aufzunehmen, dass eine Verdrehsicherung zwischen der Bodenplatte und der Montageplatte vorhanden ist.

Die erfindungsgemäße Befestigungsvorrichtung beruht zumindest teilweise auf der Erkenntnis, dass der Transport von Ladegütern wie Haustieren beispielsweise dadurch erleichtert werden kann, dass eine Grundvorrichtung mit Isofix-Befestigungsabschnitt mit einer in eine jeweilige Transportbox einführbare Bodenplatte kombiniert wird. Die Grundvorrichtung dient zur Befestigung an der Isofix-Einrichtung des Fahrzeugs und weist eine Montageplatte für die Bodenplatte auf. Die Montageplatte weist mindestens einen Rastabschnitt auf, der im montierten Zustand von Bodenplatte und Montageplatte in einer Ausnehmung der Bodenplatte aufgenommen und gegen Verdrehen gesichert ist. Die Bodenplatte ist lösbar mit der Montageplatte verbunden, sodass die Bodenplatte und damit auch die Transportbox leicht von der Montageplatte und damit der Grundvorrichtung entfernt werden kann. Dies erleichtert den Ein- und Ausbau der Transportbox. Auch ist es möglich, unterschiedliche Bodenplatten für unterschiedliche Transportboxen mit derselben Grundvorrichtung zu kombinieren. Große und kleine Transportboxen können auf ein und derselben Grundvorrichtung in verschiedenen Fahrzeugen und/oder Einbausituationen befestigt werden. Die Transportbox ist aufgrund der Verdrehsicherung sicher mit der Isofix-Einrichtung des Fahrzeugs verbunden. Aufwendige Gurtanordnungen können entfallen. Die Befestigungsvorrichtung ermöglicht somit eine sichere und stabile Befestigung an der Isofix-Einrichtung, eine bequeme Montage bzw. Demontage der Transportbox an bzw. von der Isofix-Einrichtung des Fahrzeugs und erlaubt vielfältige Kombinationen von Transportbox bzw. Bodenplatten mit der Grundvorrichtung.

Bevorzugt weist die Montagefläche mindestens zwei Rastabschnitte auf und weist die Bodenplatte mindestens zwei Ausnehmungen zur Aufnahme der mindestens zwei Rastabschnitte auf.

Bevorzugt sind die Rastabschnitte als Stege und/oder Streben ausgebildet, die sich aus der Montagefläche erheben und sich vorzugsweise parallel zueinander erstrecken, und sind die Ausnehmungen in der Bodenplatte als Langlöcher ausgebildet, in denen die Stege und/oder Streben verschiebbar geführt sind.

Bevorzugt weisen die Stege und/oder Streben eine sich von der Montagefläche erhebende Höhe in einem Bereich von 0,5 cm bis 2 cm, vorzugsweise in einem Bereich von 0,8 cm bis 1,2 cm, auf.

Bevorzugt erstreckt sich die Montagefläche der Montageplatte in einer Längsrichtung und in einer senkrecht zur Längsrichtung angeordneten Querrichtung, erstrecken sich die Stege in Längsrichtung, vorzugsweise parallel zueinander, erstrecken sich die Langlöcher in Längsrichtung, sind die Langlöcher in Querrichtung zueinander beabstandet angeordnet und sind je zwei zueinander in Querrichtung beabstandete Langlöcher derart angeordnet, dass die Bodenplatte in vorbestimmten Montageposition an der Montageplatte montierbar ist. Vorzugsweise ordnen die vorbestimmten Montagepositionen die Bodenplatte in verschiedenen Querrichtungen zur Montageplatte an. Vorzugsweise weist die Bodenplatte in den vorbestimmten Montagepositionen unterschiedliche, in Querrichtung gemessene Abstände zum Isofix-Befestigungsabschnitt auf.

Mit anderen Worten kann die Bodenplatte in verschiedenen vorbestimmten Montagepositionen an ein und derselben Grundvorrichtung montiert werden und können die vorbestimmten Montagepositionen verschiedene Abstände zum Isofix-Befestigungsabschnitt aufweisen. Dadurch kann die Bodenplatte in verschiedenen Abständen zur Isofix-Einrichtung des Fahrzeugsitzes platziert werden. Dies ermöglicht nicht nur die Verwendung unterschiedlich großer Transportboxen, sondern auch eine für den jeweiligen Anwendungsfall optimale Wahl der Transportposition.

Bevorzugt sind die Montageplatte und die Bodenplatte mittels einer einzigen Schraube lösbar miteinander verbunden. Diese bevorzugte Ausgestaltung geht von der Erkenntnis aus, dass aufgrund der Verdrehsicherung zwischen Bodenplatte und Montageplatte eine einzige lösbare Verschraubung ausreichen kann, um einen sicheren Transport zu ermöglichen.

Bevorzugt weist die Schraube einen Durchmesser in einem Bereich von 4,5 cm bis 15 cm, weiter vorzugsweise von 7 cm bis 12 cm, insbesondere bevorzugt von 9 cm bis 11 cm, auf, und/oder ist die Schraube eine Tellerschraube.

Bevorzugt weist die Montageplatte eine sich von der Montagefläche erstreckende, vorzugsweise mittig angeordnete, Gewindestange auf, die sich im montierten Zustand von Bodenplatte und Montageplatte durch eine in der Bodenplatte vorhandene Bohrung erstreckt, und weist die Befestigungsvorrichtung eine Mutter, insbesondere Tellermutter, auf, die auf die sich durch die Bohrung erstreckende Gewindestange aufschraubbar ist zur Befestigung der Bodenplatte an der Montageplatte.

Bevorzugt weist die Mutter bzw. Tellermutter einen Durchmesser in einem Bereich von 4,5 cm bis 15 cm, weiter vorzugsweise von 7 cm bis 12 cm, und insbesondere bevorzugt von 9 cm bis 11 cm, auf.

Bevorzugt ist die Bohrung für die Gewindestange als Gewindestangenlangloch ausgebildet, in der die Gewindestange verschiebbar geführt ist, vorzugsweise wobei sich das Gewindestangenlangloch in Querrichtung erstreckt und sich die Stege und/oder Streben in Längsrichtung erstrecken. Durch die Verwendung eines Gewindestangenlanglochs kann die Transportbox an der gewünschten Montageposition mittels einer einzigen Schraubverbindung mit der Grundvorrichtung lösbar verbunden werden.

Bevorzugt sind die Isofix-Platte und die Montageplatte aus einem metallischen Werkstoff hergestellt und ist die Bodenplatte aus einem nicht-metallischen Werkstoff, vorzugsweise aus einem Holzwerkstoff und/oder Holzfaserwerkstoff, weiter vorzugsweise als MDF-Platte, hergestellt.

Bevorzugt weist die Bodenplatte einen Gurtbefestigungsabschnitt zum Befestigen eines Gurtes, bevorzugt eines Haustiergurtes, auf.

Bevorzugt weist der Gurtbefestigungsabschnitt ein oder mehrere in der Bodenplatte ausgebildete Gurtausnehmungen auf, durch die der Gurt, bevorzugt Haustiergurt, durchführbar ist. Vorzugsweise weist der Gurt ein erstes Ende und ein zweites Ende auf, ist das erste Ende durch die ein oder mehrere Gurtausnehmungen durchführbar und weist das erste Ende eine Schlaufe auf, ist das zweite Ende durch die Schlaufe des ersten Endes durchführbar und weist das zweite Ende einen Befestigungsabschnitt, beispielsweise für einen Karabiner, auf, der zum lösbaren Befestigen eines in der Transportbox angeordneten Ladeguts, bevorzugt eines Haustiers, ausgebildet ist. Alternativ oder zusätzlich kann der Gurt ein erstes Ende und ein zweites Ende aufweisen, kann das erste Ende ein durch die mindestens eine oder mehrere Gurtausnehmungen durchführbares Gurthalteelement (Ankerelement) aufweisen, das in einer ersten Stellung durch die Gurtausnehmung durchführbar ist und in einer zweiten Stellung derart an der Bodenplatte anliegt, dass der Gurt mittels des Gurthalteelements an der Bodenplatte gehaltert ist, und kann das zweite Ende einen Befestigungsabschnitt, beispielsweise für einen Karabiner, aufweisen, der zum lösbaren Befestigen eines in der Transportbox (58) angeordneten Ladeguts, bevorzugt eines Haustiers, ausgebildet ist.

Diese Ausgestaltungen gehen von der Erkenntnis aus, dass das Ladegut wie beispielsweise das Haustier über einen einfachen Gurt, der durch ein oder mehrere Ausnehmungen in der Bodenplatte durchgeführt ist, sicher und zuverlässig verbunden werden kann. Da der Gurt direkt mit der Bodenplatte verbunden ist und die Bodenplatte ihrerseits mit der Grundvorrichtung fest verbunden ist, kann das Ladegut bzw. das Haustier sicher in der Transportbox transportiert werden. Ein Losgurten des Ladeguts bzw. Haustiers kann auf einfache Weise erfolgen, beispielsweise indem der am Gurt vorhandene Befestigungsabschnitt geöffnet wird. Der Gurt kann von der Bodenplatte entfernt werden, beispielsweise bei einem Wechsel zwischen verschiedenen Transportboxen, und/oder kann mit der Bodenplatte verbunden bleiben.

Bevorzugt sind die ein oder mehreren Gurtausnehmungen derart angeordnet, dass der Gurt an einem linken und/oder rechten Randbereich der Bodenplatte anbringbar ist. Dies ermöglicht zum Beispiel das Anbringen des Gurts an einer linken und/oder rechten Seite der Bodenplatte.

Bevorzugt weist die Isofix-Platte einen Isofix-Lösemechanismus auf, vorzugsweise wobei der Isofix-Lösemechanismus durch einen seitlich an der Isofix-Platte angeordneten Griff auslösbar ist.

Bevorzugt ist ein Abstand zwischen dem Isofix-Lösemechanismus, beispielsweise dem Griff, und einem Ende des Isofix-Befestigungsabschnitts in einem Bereich von 4 cm bis 15 cm, vorzugsweise 4,5 cm bis 6,5 cm.

Bevorzugt sind die Montageplatte und die Isofix-Platte gelenkig miteinander verbunden. Diese Ausgestaltung geht von der Erkenntnis aus, dass eine Neigung der Transportbox an eine Sitzneigung des Fahrzeugsitzes angepasst werden kann. Insbesondere bei Haustieren ist es vorteilhaft und möglicherweise wünschenswert, wenn eine für das Haustier optimale Neigung einstellbar ist. Dies kann zu einer gelenkschonenderen, sicheren und/oder bequemeren Transportposition des Haustiers beitragen.

Bevorzugt sind die Montagefläche der Montageplatte und eine Oberseite der Isofix-Platte in einem Winkel zueinander einstellbar, vorzugsweise wobei der Winkel in einem Bereich von 0° bis 30°, weiter bevorzugt 5° bis 20°, besonders bevorzugt 13° bis 17°, einstellbar ist, und/oder sind die Montageplatte und die Isofix-Platte um eine Kippachse kippbar, vorzugsweise wobei die Kippachse in einer Längserstreckungsrichtung der Montagefläche verläuft und/oder in einer Richtung senkrecht zu einer Erstreckungsrichtung des Isofix-Befestigungsabschnitts verläuft und/oder derart verläuft, dass die Montagefläche an eine Neigung einer Sitzfläche des Fahrzeugsitzes anpassbar ist.

Bevorzugt weist die Grundvorrichtung eine Fixiervorrichtung zum Fixieren des Winkels zwischen der Montageplatte und der Isofix-Platte auf, vorzugsweise wobei die Fixiervorrichtung mindestens einen, vorzugsweise seitlich, an der Montageplatte und/oder der Isofix-Platte angeordneten Fixierhebel aufweist, vorzugsweise wobei ein Abstand zwischen der Kippachse und dem Fixierhebel in einem Bereich von 2 cm bis 17 cm, vorzugsweise in einem Bereich von 7 cm bis 15 cm, weiter bevorzugt in einem Bereich von 9 cm bis 11 cm, ist.

Gemäß einem zweiten oder weiteren Aspekt der vorliegenden Erfindung wird eine Transportvorrichtung zum Transportieren von Gütern, insbesondere Haustieren, in einem Fahrzeug mit Isofix-Einrichtung bereitgestellt, wobei die Transportvorrichtung aufweist: eine Transportbox, bevorzugt eine Transportbox für Haustiere, und eine Befestigungsvorrichtung gemäß dem ersten Aspekt bzw. Ausgestaltungen davon, wobei in der Transportvorrichtung die Isofix-Platte mit dem Isofix-Befestigungsabschnitt an der Isofix-Einrichtung des Fahrzeugs befestigt ist, die Bodenplatte in die Transportbox eingeführt und/oder eingelegt ist und die Bodenplatte mit der Montageplatte lösbar verbunden ist.

Bevorzugt ist die Montageplatte von einer Unterseite an die Bodenplatte montiert, wobei vorzugsweise eine Gewindestange der Montageplatte durch die Bodenplatte hindurchragt und auf einer Oberseite der Bodenplatte mit einer Tellermutter lösbar verschraubt ist.

Bevorzugt weist die Transportbox eine auf der Oberseite der Bodenplatte angeordnete und entnehmbare Schaumstoffeinlage auf, vorzugsweise wobei durch Entnehmen der Schaumstoffeinlage die Tellermutter zugänglich ist.

Bevorzugt ist die Transportbox auf der Montageplatte in vorbestimmten Montagepositionen montierbar, vorzugsweise wobei in den vorbestimmten Montagepositionen die Transportbox verschiedene Abstände zur Isofix-Einrichtung und/oder dem Isofix-Befestigungsabschnitt aufweist, und/oder eine seitliche Öffnung der Transportbox nach links oder rechts angeordnet ist.

Gemäß einem dritten oder weiteren Aspekt der vorliegenden Erfindung wird ein Verfahren zur Montage oder Demontage einer Transportbox, bevorzugt einer Transportbox für Haustiere, an bzw. von einer Isofix-Einrichtung eines Fahrzeugsitzes mittels einer Befestigungsvorrichtung für die Transportbox bereitgestellt, wobei die Befestigungsvorrichtung aufweist: eine Grundvorrichtung aufweisend eine Isofix-Platte mit einem Isofix-Befestigungsabschnitt zum Befestigen der Isofix-Platte an der Isofix-Einrichtung und eine mit der Isofix-Platte verbundene Montageplatte, die eine Montagefläche und mindestens einen von der Montagefläche vorspringenden Rastabschnitt aufweist; und eine in der Transportbox angeordnete Bodenplatte, die mindestens eine Ausnehmung zur Aufnahme des mindestens einen Rastabschnitts aufweist. Das Verfahren weist folgende Schritte auf: Befestigen der Grundvorrichtung am Fahrzeugsitz durch Befestigen der Isofix-Platte an der Isofix-Einrichtung des Fahrzeugsitzes, Anordnen der Transportbox auf der Montageplatte derart, dass die mindestens eine Ausnehmung in der Bodenplatte den mindestens einen Rastabschnitt der Montageplatte aufnimmt, und Befestigen der Bodenplatte an der Montageplatte, vorzugsweise durch lösbares Verschrauben der Bodenplatte mit der Montageplatte.

Bevorzugt weist das Verfahren den Schritt auf: Demontieren der Transportbox von der Grundvorrichtung durch Lösen der Verbindung, vorzugsweise Verschraubung, zwischen Bodenplatte und Montageplatte.

Bevorzugt weist die Bodenplatte mehrere Ausnehmungen zur Aufnahme des mindestens einen Rastabschnitts auf und wird die Bodenplatte derart auf der Montageplatte angeordnet, dass die Transportbox eine bevorzugte Montageposition von mehreren möglichen, vorbestimmten Montagepositionen einnimmt, vorzugsweise wobei die vorbestimmten Montagepositionen die Transportbox in verschiedenen Abständen zur Isofix-Einrichtung anordnen und/oder eine seitliche Öffnung der Transportbox nach links oder rechts anordnen.

Bevorzugte Ausgestaltungen des ersten Aspekts sind mit bevorzugten Ausgestaltungen des zweiten Aspekts und/oder mit bevorzugten Ausgestaltungen des dritten Aspekts in beliebig zweckmäßiger Weise kombinierbar.

Bevorzugte Ausgestaltungen des zweiten Aspekts sind mit bevorzugten Ausgestaltungen des ersten Aspekts und/oder mit bevorzugten Ausgestaltungen des dritten Aspekts in beliebig zweckmäßiger Weise kombinierbar.

Bevorzugte Ausgestaltungen des dritten Aspekts sind mit bevorzugten Ausgestaltungen des zweiten Aspekts und/oder mit bevorzugten Ausgestaltungen des ersten Aspekts in beliebig zweckmäßiger Weise kombinierbar.

Nachfolgend werden besonders bevorzugte Ausführungsformen der Erfindung anhand der Figuren näher erläutert.
**Figur 1** ist eine schematische Ansicht einer Ausgestaltung einer Grundvorrichtung, die Teil einer erfindungsgemäßen Befestigungsvorrichtung sein kann.
**Figur 2** ist eine Fotoaufnahme einer Grundvorrichtung, bei der die Montageplatte und Isofix-Platte der Grundvorrichtung gelenkig miteinander verbunden sind.
**Figur 3** ist eine schematische Ansicht einer Bodenplatte, die mit der Grundvorrichtung lösbar verbindbar ist.
**Figur 4** zeigt eine Ausgestaltung einer erfindungsgemäßen Befestigungsvorrichtung, bei der die Bodenplatte mit der Grundvorrichtung lösbar verbunden ist.
**Figur 5** zeigt eine Ansicht der Befestigungsvorrichtung von unten, bei der die Montageplatte der Grundvorrichtung mit der Bodenplatte lösbar verbunden ist.
**Figur 6** zeigt eine Transportbox, in der eine Bodenplatte eingelegt und/oder eingeführt ist.
**Figur 7** zeigt eine Ausgestaltung einer erfindungsgemäßen Transportvorrichtung, bei der eine Transportbox über die in der Transportbox eingelegten Bodenplatte mit der Grundvorrichtung lösbar verbunden ist.
**Figur 8** zeigt eine Innenansicht der Transportbox mit Blick auf die in die Transportbox eingelegte Bodenplatte.
**Figur 9** zeigt eine Transportbox, die mit einer Befestigungsvorrichtung verbunden ist.
**Figur 10** zeigt eine Transportbox mit einer auf der Bodenplatte angeordneten entnehmbaren Schaumstoffeinlage.
**Figuren 11** **und** **12** zeigen eine Befestigungsmöglichkeit eines Gurts, beispielsweise Haustiergurts, an der Bodenplatte.
**Figuren 13 und 14** zeigen eine weitere Befestigungsmöglichkeit eines Gurts, beispielsweise Haustiergurts, an der Bodenplatte.

Innerhalb der Figuren bezeichnen gleiche Bezugszeichen gleiche Gegenstände oder Komponenten.

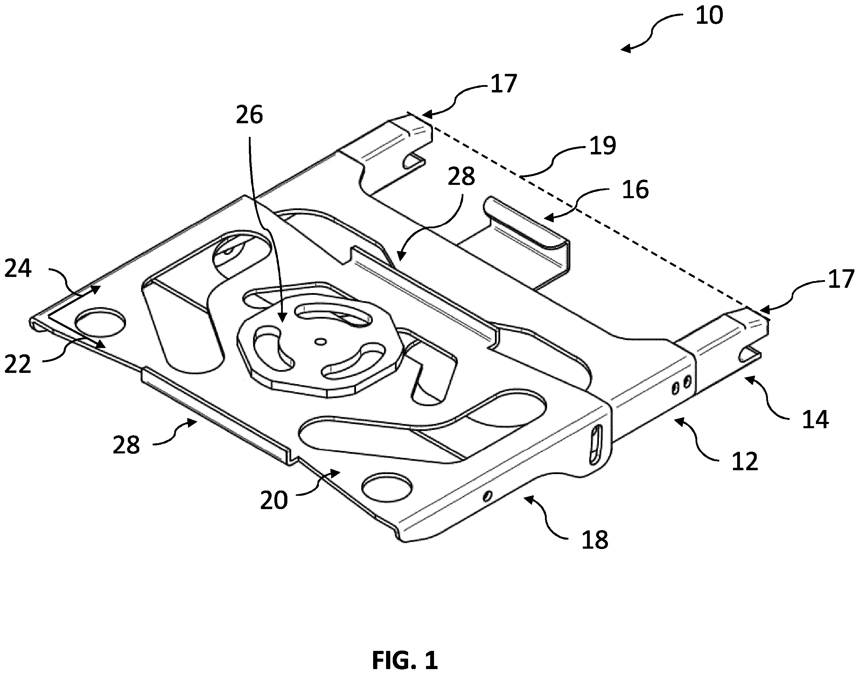

**Figur 1** zeigt eine Grundvorrichtung 10 aufweisend eine Isofix-Platte 12 mit einem Isofix-Befestigungsabschnitt 14 zur Befestigung an einer Isofix-Einrichtung eines Fahrzeugs bzw. Fahrzeugsitzes und eine mit der Isofix-Platte 12 verbundene Montageplatte 18. Ein seitlich an der Isofix-Platte 14 angeordneter Isofix-Lösemechanismus 16 ermöglicht das Lösen der Isofix-Platte 14 von der Isofix-Einrichtung. Im konkreten Beispiel von **Figur 1** ist der Isofix-Lösemechanismus 16 in Form eines Griffs ausgebildet, kann in anderen Beispielen jedoch andere, beliebig zweckmäßige Formen aufweisen. Der Isofix-Lösemechanismus 16 kann einen in Querrichtung 24 gemessenen Abstand zu einer gedachten Linie 19, die Enden 17 des Isofix-Befestigungsabschnitts 14 verbindet, aufweisen, wobei der Abstand in einem Bereich von 4 cm bis 15 cm, vorzugsweise in einem Bereich von 4,5 cm bis 6,5 cm ist.

Die Montageplatte 18 weist eine Montagefläche 20 auf. Die Montagefläche 20 erstreckt sich in Längsrichtung 22 und in Querrichtung 24 und weist im konkreten Beispiel eine im Wesentlichen rechteckige Form auf, kann jedoch andere, beliebig zweckmäßige Form aufweisen. Auf der Montagefläche 20 kann eine Bodenplatte, wie sie später näher beschrieben wird, montiert werden, beispielsweise mittels einer in **Figur 1** angedeuteten Tellermutter 26.

Die Montageplatte 18 weist Rastabschnitte auf, die sich aus der Montagefläche 20 erheben. Im Beispiel von **Figur 1** sind die Rastabschnitte als Stege 28 und/oder Streben ausgebildet. Im Beispiel von **Figur 1** erstrecken sich die Stege 28 in Längsrichtung 22 und parallel zueinander. Im Beispiel von **Figur 1** sind die Stege 28 durch seitliches Hochbiegen der Montageplatte 18 gebildet. Die Rastabschnitte bzw. Stege 28 können sich von der Montagefläche 20 mit einer Höhe in einem Bereich von 0,5 cm bis 2 cm, vorzugsweise in einem Bereich von 0,8 cm bis 1,2 cm, erheben.

In anderen nicht gezeigten Ausführungsformen können die Rastabschnitte andere Formen aufweisen und/oder an anderen Positionen auf der Montagefläche 20 angeordnet sein. Auch ist denkbar, dass lediglich ein einziger Rastabschnitt auf der Montagefläche 20 angeordnet ist. Der Rastabschnitt dient als Verdrehsicherung für eine auf der Montageplatte 28 angeordneten Bodenplatte, wie später näher erklärt wird. Die in **Figur 1** gezeigte Variante mit parallel zueinander verlaufenden Stegen 28 ist nur eine von vielen möglichen Varianten, wie Rastabschnitte auf der Montagefläche 20 ausgebildet sein könnten. Das gezeigte Beispiel von **Figur 1** sollte daher nicht einschränkend aufgefasst werden.

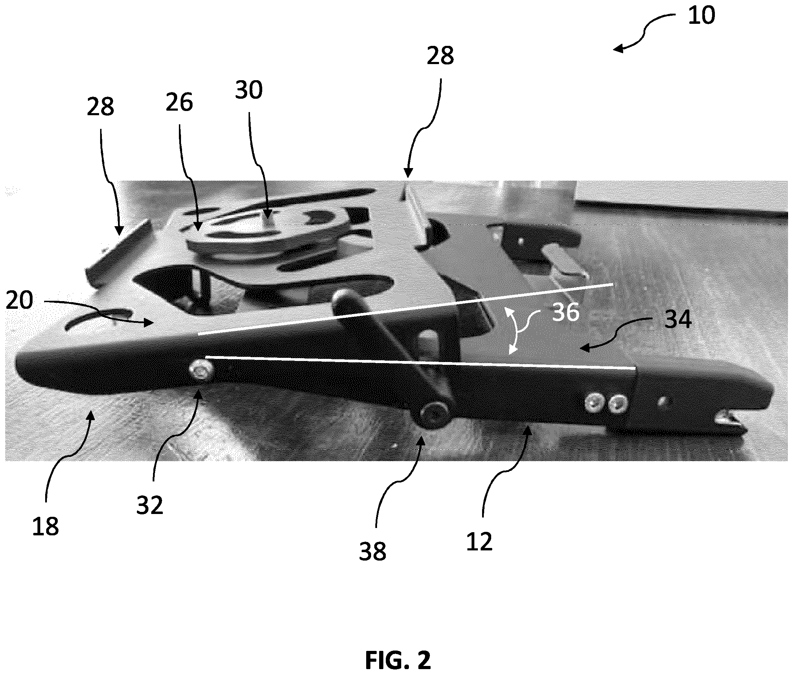

**Figur 2** zeigt eine Fotoaufnahme der Grundvorrichtung 10 mit der Isofix-Platte 12, der Montageplatte 18 und der sich von der Montagefläche 20 erhebenden Stege 28. **Figur 2** zeigt ferner die bereits erwähnte Gewindestange 30, auf die die Tellermutter 26 aufschraubbar ist. Die Gewindestange 30 und die Tellermutter 26 dienen zur lösbaren Verbindung der Bodenplatte mit der Montageplatte 18, wie später näher erklärt wird. Anstelle von Gewindestange 30 und Tellermutter 26 kann auch eine Tellerschraube verwendet werden.

Die Gewindestange 30 oder die Tellerschraube können einen Durchmesser in einem Bereich von 4,5 cm bis 15 cm, bevorzugt von 7 cm bis 12 cm, weiter bevorzugt von 9 cm bis 11 cm aufweisen.

In der Ausführungsform von **Figur 2** sind die Isofix-Platte 12 und die Montageplatte 18 gelenkig miteinander verbunden. Im konkreten Beispiel sind die Isofix-Platte 12 und die Montageplatte 18 um eine Kippachse 32 kippbar. Die Montagefläche 20 der Montageplatte 18 und eine Oberseite 34 der Isofix-Platte 12 sind in einem Winkel 36 zueinander einstellbar. Bevorzugt ist der Winkel 36 in einem Bereich von 0° bis 30°, weiter bevorzugt in einem Bereich von 5° bis 20°, besonders bevorzugt in einem Bereich von 13° bis 17° einstellbar. Die gelenkige Verbindung von Montageplatte 18 und Isofix-Platte 12 bzw. das Einstellen eines Winkels zwischen der Montageplatte 18 und der Isofix-Platte 12 ermöglicht, dass die Montagefläche 20 in ihrer Neigung an eine Neigung der Sitzfläche des Fahrzeugsitzes anpassbar ist. Die eingestellte Neigung bzw. der eingestellte Winkel 36 kann mittels einer Fixiervorrichtung 38 fixiert werden. Im konkreten Beispiel ist die Fixiervorrichtung 38 als seitlich von der Montageplatte 18 und/oder der Isofix-Platte 12 angeordnete Fixierhebel 38 ausgebildet. Durch Drehen der Fixierhebel ist der Winkel zwischen den Platten 12, 18 fixierbar. Bevorzugt ist ein Abstand zwischen der Kippachse 32 und dem Fixierhebel 38 in einem Bereich von 2 cm bis 17 cm, weiter bevorzugt in einem Bereich von 7 cm bis 15 cm, besonders bevorzugt in einem Bereich von 9 cm bis 11 cm.

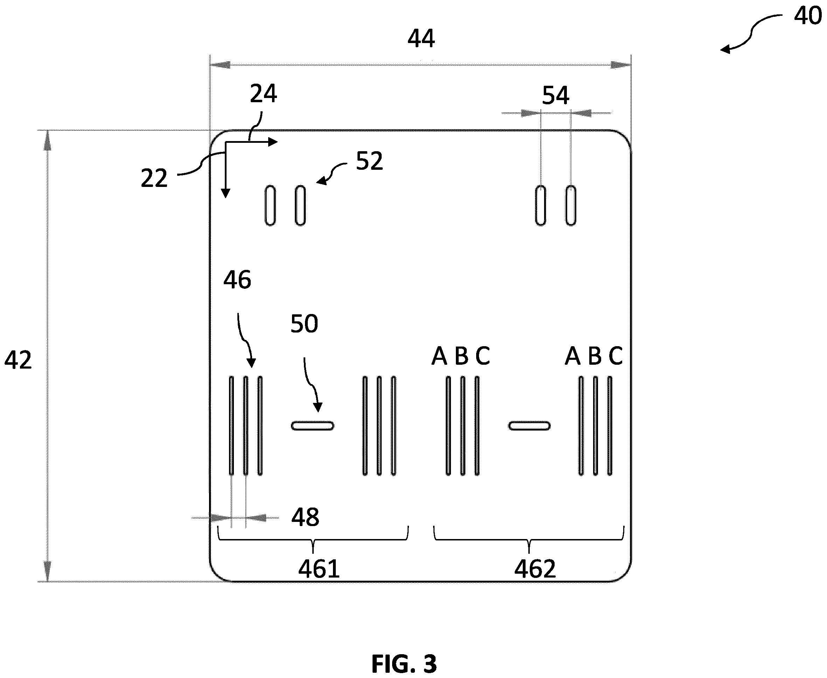

**Figur 3** zeigt eine Ausführungsform einer Bodenplatte 40. Die Bodenplatte 40 kann in eine Transportbox eingeführt und/oder eingelegt werden. Die Bodenplatte 40 ist mit der Grundvorrichtung, die in Zusammenhang mit den **Figuren 1** **und** **2** beschrieben wurde, lösbar verbindbar, beispielsweise über die angesprochene Gewindestange mit Tellermutter und/oder über eine lösbare Schraubverbindung, beispielsweise mittels der erwähnten Tellerschraube.

Die Bodenplatte 40 kann jede beliebig zweckmäßige Form aufweisen. Im konkreten Beispiel ist die Bodenplatte 40 im Wesentlichen rechteckig mit einer Länge 42 und einer Breite 44. Die Länge 42 und/oder Breite 44 und/oder die Form der Bodenplatte 40 können je nach Anwendungsfall variieren und können von den konkreten Maßen der Transportbox abhängen.

Die Bodenplatte 40 weist mehrere Ausnehmungen 46 auf. Im montierten Zustand von Montageplatte und Bodenplatte 40 sind die Rastabschnitte bzw. Stege/Streben in den Ausnehmungen 46 aufgenommen. Durch Einführen der Rastabschnitte in die Ausnehmungen 46 (und anschließender lösbarer Verbindung) erfolgt eine Verdrehsicherung zwischen der Bodenplatte 40 und der Montageplatte. Die Ausnehmungen 46 erstrecken sich in **Figur 3** entlang der Längsrichtung 22. Die Ausnehmungen 46 sind im konkreten Beispiel als Langlöcher ausgebildet, sodass die als Stege bzw. Streben ausgebildete Rastabschnitte darin verschieblich geführt sind. Die Ausnehmungen 46 sind in Querrichtung 24 parallel zueinander angeordnet. Je zwei zueinander in Querrichtung 24 parallel angeordnete Ausnehmungen 46 definieren vorbestimmten Montagepositionen der Bodenplatte 40 an der Montageplatte der Grundvorrichtung. Beispielhaft sind in **Figur 3** drei Montagepositionen A, B und C angedeutet. Selbstverständlich kann die Bodenplatte 40 in anderen Ausführungsformen mehr oder weniger als drei Montagepositionen aufweisen. Die Montagepositionen A-C positionieren die Bodenplatte 40 in verschiedenen Querrichtungen 24 zur Montageplatte. Die Montagepositionen A-C sind so gewählt, dass in den unterschiedlichen Montagepositionen A-C die Bodenplatte 40 einen unterschiedlich großen Abstand von der Isofix-Einrichtung des Fahrzeugsitzes hat. Mit anderen Worten lässt sich mittels der Montagepositionen A-C ein Abstand zur Isofix-Einrichtung des Fahrzeugsitzes anpassen. Das ist besonders hilfreich bei Verwendung einer Transportbox in unterschiedlichen Fahrzeugtypen und/oder -modellen und/oder bei Verwendung von unterschiedlich großen Transportboxen. Ein Abstand 48 zwischen zwei direkt benachbarten Ausnehmungen 46 bestimmt, um wie viel die Transportbox bei der Wahl der Montagepositionen A-C von der Isofix-Einrichtung des Fahrzeugsitzes weg wandert oder darauf zu wandert.

Die Bodenplatte 40 weist ferner ein sich in Querrichtung 24 zu den Ausnehmungen 46 erstreckendes Gewindestangenlangloch (Tellerschraubenlangloch) 50. Die in **Figur 2** erwähnte Gewindestange 30 bzw. Tellerschraube ist durch das Gewindestangenlangloch 50 in Querrichtung 24 verschiebbar. Dadurch kann die Bodenplatte mit nur einer einzigen Schraubverbindung in den verschiedenen Montagepositionen A-C mit der Montageplatte lösbar verbunden werden.

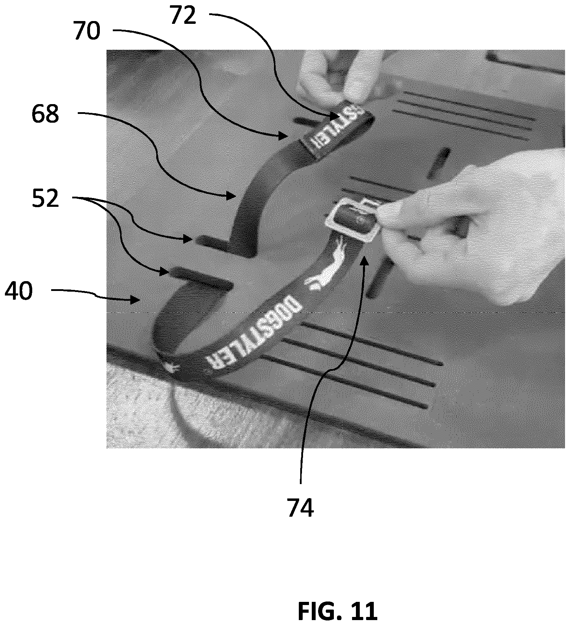

Die Bodenplatte 40 weist ferner einen Gurtbefestigungsabschnitt 52 auf. Der Gurtbefestigungsabschnitt 52 dient zur Befestigung eines Gurts an der Bodenplatte, wie näher in **Figuren 11** **und** **12** und **Figuren 13 und 14** beschrieben wird. Der Gurtbefestigungsabschnitt 52 ist im konkreten Beispiel von **Figur 3** als zwei in einem Abstand 54 voneinander beabstandete Ausnehmungen gebildet. Im konkreten Beispiel sind die Ausnehmungen als Langlöcher ausgebildet. Andere Varianten des Gurtbefestigungsabschnitts 52 sind denkbar. Beispielsweise kann der Gurtbefestigungsabschnitt 52 nur eine einzige Ausnehmung aufweisen.

Wie in **Figur 3** gezeigt ist, kann die Bodenplatte 40 mehrere Sätze oder Gruppierungen 461, 462 von Ausnehmungen 46, 52 aufweisen. Die Gruppierungen 461, 462 ermöglichen ein Befestigen der Bodenplatte 40 in einer ersten oder zweiten Orientierung der Bodenplatte 40 zur Montageplatte. Beispielsweise ließe sich die Bodenplatte 40 in der Gruppierung 461 so anbringen, dass eine seitliche Öffnung der Transportbox beispielsweise link angeordnet ist, und ließe sich die Bodenplatte 40 in der Gruppierung 462 so anbringen, dass die seitliche Öffnung der Transportbox beispielsweise rechts angeordnet ist.

Die Bodenplatte 40 kann aus einem nicht-metallischen Werkstoff, vorzugsweise aus einem Holzwerkstoff und/oder Holzfaserwerkstoff, weiter vorzugsweise als MDF-Platte, hergestellt sein.

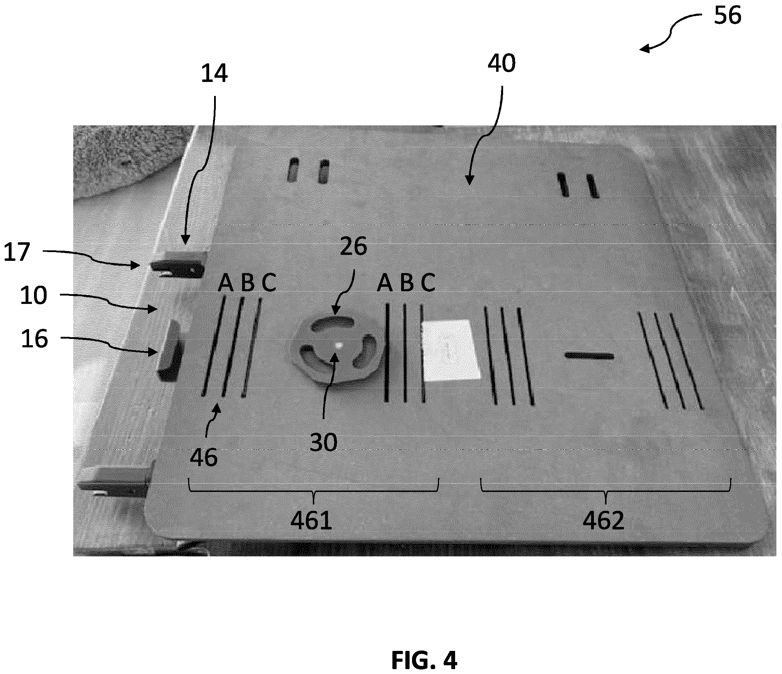

**Figur 4** zeigt eine Ansicht, bei der die Bodenplatte 40 mit der Grundvorrichtung 10 lösbar verbunden ist. Im konkreten Beispiel ist die Gewindestange 30 der Montageplatte (nicht gezeigt) durch eine Ausnehmung (Gewindelangloch 50, siehe **Figur 3****)** in der Bodenplatte 40 geführt und mittels der Tellermutter 26 lösbar mit der Montageplatte verbunden. Alternativ kann die erwähnte Tellerschraube durch die Ausnehmung in der Bodenplatte 40 geführt sein. Eine einzige lösbare Verbindung genügt, da die Rastabschnitte der Montageplatte in den Ausnehmungen 46 der Bodenplatte 40 aufgenommen sind. **Figur 4** verdeutlich zudem den in **Figur 3** erwähnten, einstellbaren Abstand der Bodenplatte 40 von dem Isofix-Befestigungsabschnitt 14 der Grundvorrichtung 10. Eine Befestigung der Bodenplatte 40 in der Montageposition A positioniert die Bodenplatte 40 näher am Ende 17 des Isofix-Befestigungsabschnitts 14 im Vergleich zu einer Befestigung der Bodenplatte 40 in der Montageposition C.

In **Figur 4** ist die Grundvorrichtung 10 mit der Bodenplatte 40 unter Verwendung der Gruppierung 461 lösbar verbunden. In der Gruppierung 461 ist der Isofix-Befestigungsabschnitt 14 links von der Bodenplatte 40 angeordnet. Würde die Gruppierung 462 verwendet werden, wäre der Isofix-Befestigungsabschnitt 14 rechts von der Bodenplatte 40 angeordnet. Durch die Verwendung der Gruppierung 461 bzw. 462 kann der Isofix-Befestigungsabschnitts 14 auf einer linken bzw. rechten Seite der Bodenplatte 40 angeordnet werden.

Eine Kombination aus Grundvorrichtung 10 und Bodenplatte 40 stellt eine Befestigungsvorrichtung 56 im Sinne dieser Offenbarung da. Mit anderen Worten weist eine Befestigungsvorrichtung 56 eine Grundvorrichtung 10 und eine Bodenplatte 40 auf, wobei die Bodenplatte 40 mit der Montageplatte (hier unterhalb der Bodenplatte 40 angeordnet) lösbar verbunden ist und vorzugsweise in einer Transportbox eingelegt und/oder eingeführt ist.

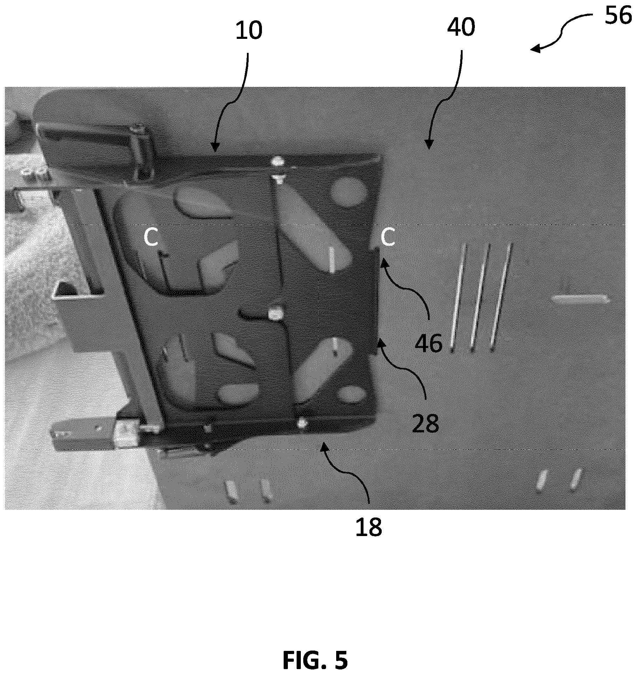

**Figur 5** zeigt die Befestigungsvorrichtung 56 von **Figur 4** von einer Unterseite. Wie zu erkennen ist, ist die Bodenplatte 40 an der Montageposition C mit der Montageplatte 18 der Grundvorrichtung 10 lösbar verbunden. Im verbundenen Zustand sind die Stege 28 (ein Beispiel für Rastabschnitte) in die Ausnehmungen 46 aufgenommen und sorgen so für eine Verdrehsicherung zwischen Bodenplatte 40 und Grundvorrichtung 10.

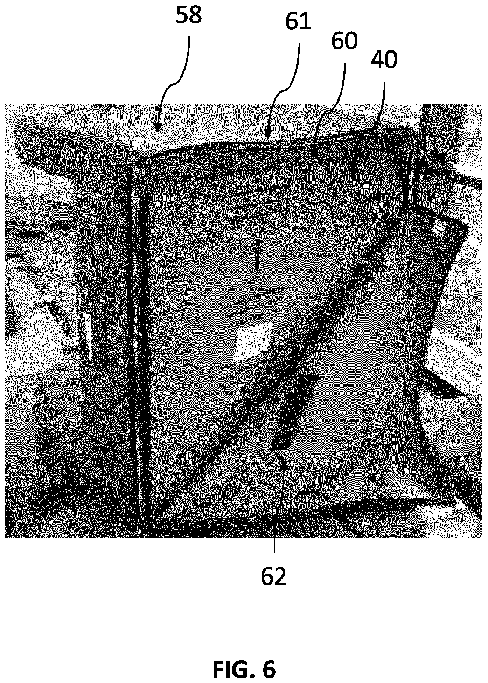

**Figur 6** zeigt eine Transportbox 58, in der die Bodenplatte 40 eingelegt und/oder eingeführt ist. Im konkreten Beispiel weist die Transportbox 58 eine umlaufende Tasche 60 auf, in die die Bodenplatte 40 eingelegt werden kann. Ein Verschluss 61 ermöglicht das Verschließen der Tasche 60, sodass die Bodenplatte 40 in der verschlossenen Tasche 60 fest und ohne Verrutschen bzw. Verdrehen aufgenommen werden kann. Ein Stoff der Tasche 60 kann auf der Unterseite bzw. auf einer der Montageplatte zugewandten Seite eine Öffnung 62 aufweisen, sodass die Ausnehmungen der Bodenplatte 40 zugänglich sind.

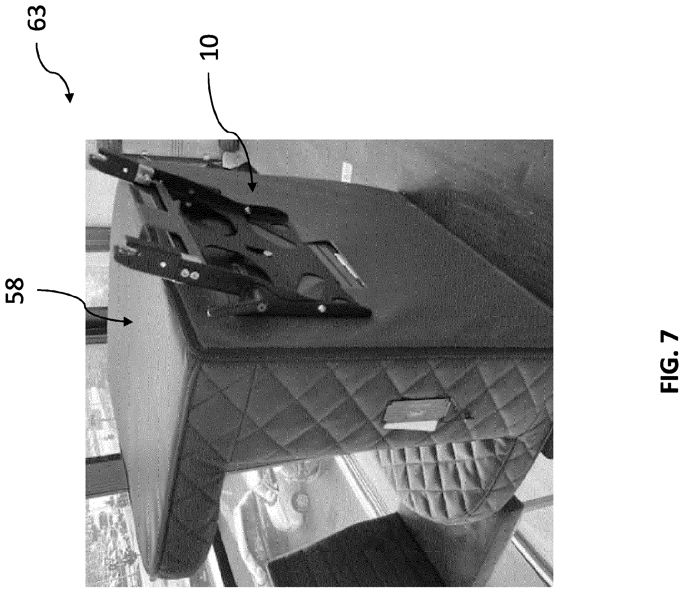

**Figur 7** zeigt eine Transportvorrichtung 63 gemäß einer Ausführungsform der vorliegenden Erfindung. Die Transportvorrichtung 63 weist die Transportbox 58, die in der Transportbox 58 eingelegte Bodenplatte und die mit der Bodenplatte lösbar verbundene Grundvorrichtung 10 auf. Die Transportbox 58 kann zum Transportieren von Gütern wie beispielsweise von Haustieren verwendet werden.

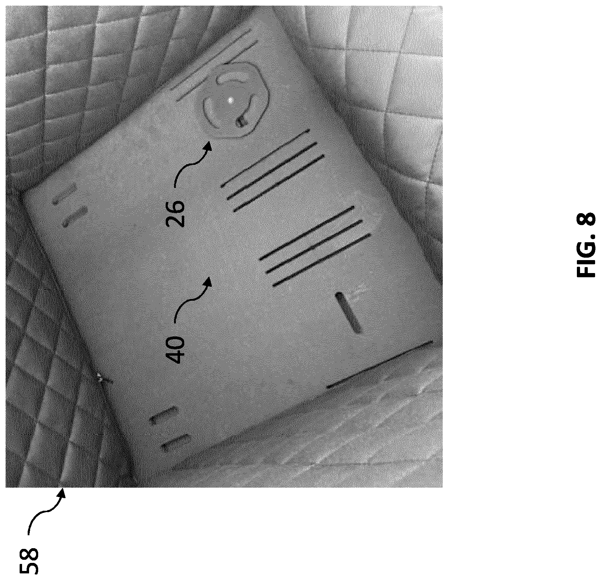

**Figur 8** zeigt die Transportbox 58 von Innen mit Blick auf die in die Transportbox 58 eingelegte Bodenplatte 40. Die Bodenplatte 40 ist mittels einer einzigen Schraube lösbar mit der Grundvorrichtung verbunden. Durch Lösen der Tellermutter 26 kann die Transportbox 58 zusammen mit der Bodenplatte 40 von der Grundvorrichtung entfernt werden.

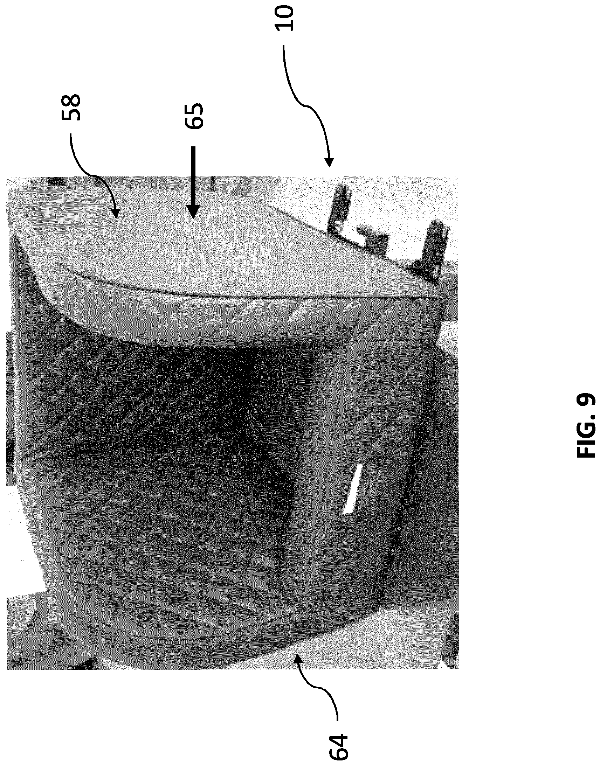

**Figur 9** zeigt die Transportbox 58 mit einer seitlichen Öffnung 64. Die Transportbox 58 ist so mit der Grundvorrichtung 10 verbunden, dass im konkreten Beispiel von **Figur 9** die seitliche Öffnung 64 in Blickrichtung entlang des Pfeils 65 links angeordnet ist. Durch die Wahl der erwähnten Gruppierungen 461 oder 462 kann die Transportbox 58 auf derselben Grundvorrichtung 10 derart angeordnet sein, dass die seitliche Öffnung 64 mit Blickrichtung entlang des Pfeils 65 auf der linken oder rechten Seite angeordnet wäre.

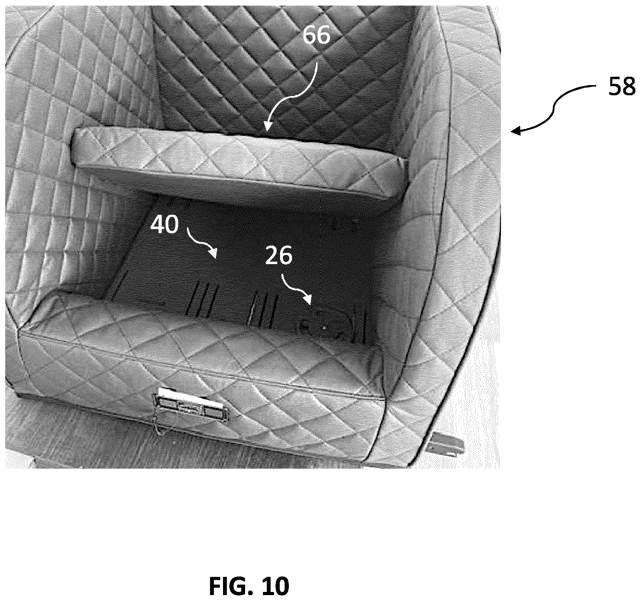

**Figur 10** zeigt die Transportbox 58 von oben. In der Transportbox 58 kann eine entnehmbare Schaumstoffeinlage 66 eingelegt werden, die die Bodenplatte 40 von oben abdeckt. Durch Entnehmen und/oder Anheben der Schaumstoffeinlage 66 wird die Bodenplatte 40 sichtbar und wird die Tellermutter 26 bzw. Tellerschraube zugänglich.

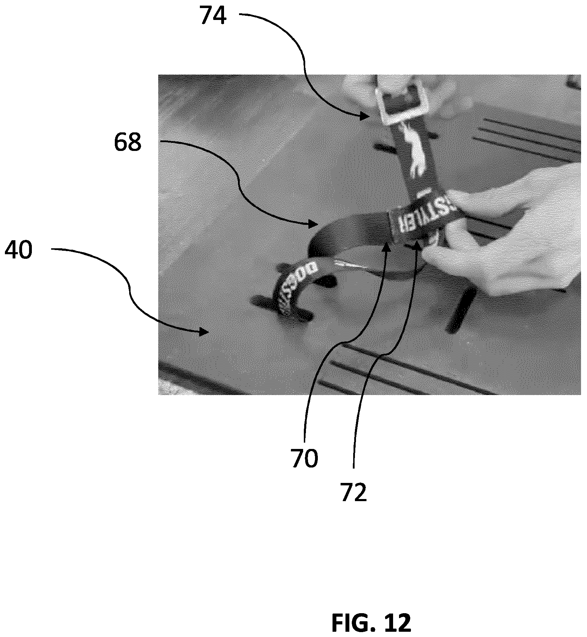

**Figur 11** zeigt eine Möglichkeit zur Befestigung eines Gurts 68 wie beispielsweise eines Haustiergurts an der Bodenplatte 40. Im konkreten Beispiel von **Figur 11** wird der Gurt 68 durch die Ausnehmungen des Gurtbefestigungsabschnitts 52 geführt. Der Gurt 68 weist ein erstes Ende 70 mit einer Schlaufe 72 und ein zweites Ende 74 auf. **Figur 12** zeigt, wie das zweite Ende 74 durch die Schlaufe 72 des ersten Endes 70 geführt ist, sodass der Gurt 68 fest mit der Bodenplatte 40 verbunden ist. Das zweite Ende 74 kann einen Befestigungsabschnitt beispielsweise für einen Karabiner aufweisen. Durch Öffnen des Karabiners kann das Ladegut oder das Haustier von dem Gurt 68 gelöst bzw. vom Gurt 68 abgegurtet werden. Der Gurt 68 kann von der Bodenplatte 40 entfernt werden, beispielsweise bei einem Wechsel zwischen verschiedenen Transportboxen, und/oder kann mit der Bodenplatte 40 verbunden bleiben.

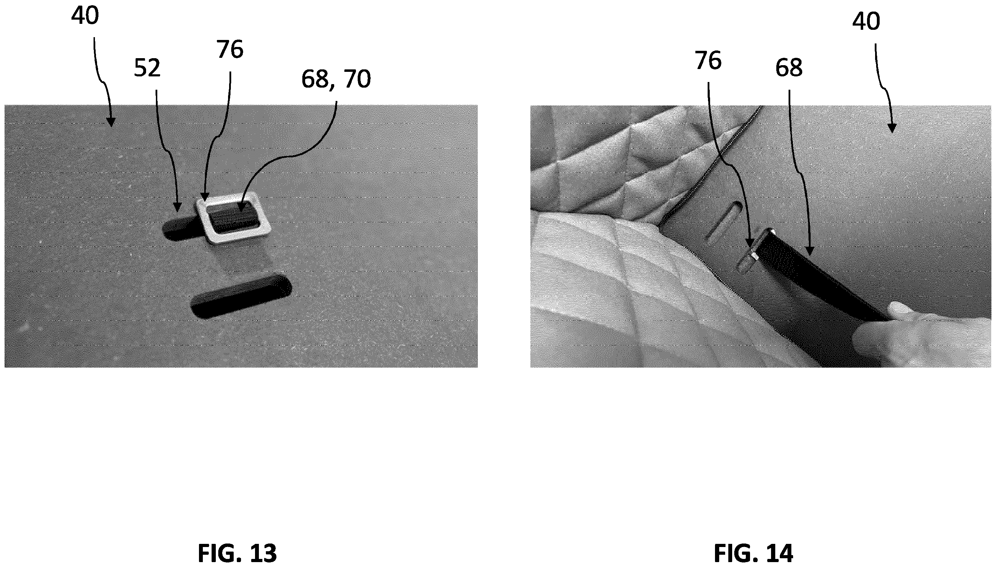

**Figuren 13 und 14** zeigen eine weitere Möglichkeit zur Befestigung eines Gurts 68, beispielsweise eines Haustiergurts, an der Bodenplatte 40. **Figur 13** zeigt eine Unterseite der Bodenplatte 40. **Figur 14** zeigt eine Oberseite der Bodenplatte 40. Im konkreten Beispiel von **Figuren 13 und 14** weist der Gurt 68 am ersten Ende 70 ein Gurthalteelement (Ankerelement) 76 auf. Das Gurthalteelement 76 kann in einer ersten Stellung durch die Ausnehmung des Gurtbefestigungsabschnitts 52 durchgeführt werden. Das Gurthaltelement 76 kann anschließend in eine zweite Stellung gebracht werden, sodass das Gurthalteelement 76 an der Bodenplatte 40 anliegt und nicht mehr durch die Ausnehmung zurückgeführt werden kann. In der zweiten Stellung des Gurthalteelements 76 haltert das Gurthalteelement 76 den Gurt 68 an der Bodenplatte 40. Im konkreten Beispiel von **Figuren 13 und 14** kann das Gurthalteelement 76 derart verdreht werden, dass es in der ersten Stellung durch die Ausnehmung geführt werden kann und in der zweiten Stellung fest an der Bodenplatte 40 anliegt, sodass das Gurthalteelement 76 in der verdrehten, zweiten Stellung den Gurt 68 an der Bodenplatte 40 haltert, wie in **Figur 14** angedeutet ist. Beliebig zweckmäßige Varianten und/oder Bewegungen zwischen der ersten und zweiten Stellung des Gurthalteelements 76 sind denkbar. Das zweite Ende (nicht gezeigt) des Gurts 68 kann einen Befestigungsabschnitt beispielsweise für einen Karabiner aufweisen. Durch Öffnen des Karabiners kann das Ladegut oder das Haustier von dem Gurt 68 gelöst bzw. vom Gurt 68 abgegurtet werden. Der Gurt 68 kann von der Bodenplatte 40 entfernt werden, beispielsweise durch Bringen des Gurthalteelements 76 in die erste Stellung, sodass der Gurt 68 bei verschiedenen Transportboxen verwendet werden kann.

Im Folgenden wird unter Bezugnahme der **Figuren 1 bis 14** eine Ausführungsform eines Verfahrens zur Montage einer Transportbox 58 an einer Isofix-Einrichtung eines Fahrzeugsitzes beschrieben.

Die Grundvorrichtung 10 wird am Fahrzeugsitz befestigt durch Befestigen der Isofix-Platte 12 an der Isofix-Einrichtung des Fahrzeugsitzes.

Die Transportbox 58 wird auf der Montageplatte 18 derart angeordnet, dass die mindestens eine Ausnehmung 46 in der Bodenplatte 40 den mindestens einen Rastabschnitt (beispielsweise die Stege 28) der Montageplatte 18 aufnimmt.

Die Bodenplatte 40 wird an der Montageplatte 18 befestigt, vorzugsweise durch lösbares Verschrauben der Bodenplatte 40 mit der Montageplatte 18.

Die beschriebenen Schritte können in beliebig zweckmäßiger Reihenfolge erfolgen.

Die Demontage der Transportbox 58 von der Grundvorrichtung 10 kann durch Lösen der Verbindung, vorzugsweise Verschraubung, zwischen Bodenplatte 40 und Montageplatte 18 erfolgen. Die demontierte Transportbox 58 kann anschließend an einen weiteren Verwendungsort transportiert werden. Die Grundvorrichtung 10 kann an der Isofix-Einrichtung des Fahrzeugsitzes befestigt bleiben.

Wenn die Bodenplatte 40 mehrere Ausnehmungen 46 und/oder Gruppierungen 461, 462 zur Aufnahme des mindestens einen Rastabschnitts (bzw. der Stege 28) aufweist, kann die Bodenplatte 40 derart auf der Montageplatte 18 angeordnet werden, dass die Transportbox 58 eine bevorzugte Montageposition von mehreren, möglichen Montagepositionen A-C einnimmt, wobei die Montagepositionen A-C die Transportbox 58 in verschiedenen Abständen zur Isofix-Einrichtung anordnen und/oder eine seitliche Öffnung 64 der Transportbox 58 nach links oder rechts anordnen.

Die folgenden Aspekte sind bevorzugte Ausgestaltungen der Erfindung:
1. Befestigungsvorrichtung (56) zum Befestigen einer Transportbox (58), bevorzugt einer Transportbox (58) für Haustiere, an einer Isofix-Einrichtung eines Fahrzeugsitzes, wobei die Befestigungsvorrichtung (58) aufweist:
   - eine Grundvorrichtung (10) aufweisend
      - eine Isofix-Platte (12) mit einem Isofix-Befestigungsabschnitt (14) zum Befestigen der Isofix-Platte (12) an der Isofix-Einrichtung des Fahrzeugsitzes und
      - eine mit der Isofix-Platte (12) verbundene Montageplatte (18), die eine Montagefläche (20) und mindestens einen von der Montagefläche (20) vorspringenden Rastabschnitt aufweist, und
   - eine in die Transportbox (58) einführbare und/oder einlegbare Bodenplatte (40), die mit der Montageplatte (18) an der Montagefläche (20) lösbar verbindbar ist, wobei die Bodenplatte (40) mindestens eine Ausnehmung (46) aufweist, die dazu ausgebildet ist, im verbundenen Zustand von Montageplatte (18) und Bodenplatte (12) den mindestens einen Rastabschnitt derart aufzunehmen, dass eine Verdrehsicherung zwischen der Bodenplatte (12) und der Montageplatte (18) vorhanden ist.
2. Befestigungsvorrichtung (56) nach Aspekt 1, wobei die Montagefläche (20) mindestens zwei Rastabschnitte aufweist und die Bodenplatte (40) mindestens zwei Ausnehmungen (46) zur Aufnahme der mindestens zwei Rastabschnitte aufweist.
3. Befestigungsvorrichtung (56) nach Aspekt 2, wobei
   - die Rastabschnitte als Stege (28) und/oder Streben ausgebildet sind, die sich aus der Montagefläche (20) erheben und sich vorzugsweise parallel zueinander erstrecken, und
   - die Ausnehmungen (46) in der Bodenplatte (40) als Langlöcher ausgebildet sind, in denen die Stege (28) und/oder Streben verschiebbar geführt sind.
4. Befestigungsvorrichtung (56) nach Aspekt 3, wobei die Stege (28) und/oder Streben eine sich von der Montagefläche (20) erhebende Höhe in einem Bereich von 0,5 cm bis 2 cm, vorzugsweise in einem Bereich von 0,8 cm bis 1,2 cm, aufweisen.
5. Befestigungsvorrichtung (56) nach Aspekt 3 oder 4, wobei
   - sich die Montagefläche (20) in einer Längsrichtung (22) und in einer senkrecht zur Längsrichtung (22) angeordneten Querrichtung (24) erstreckt,
   - sich die Stege (28) in Längsrichtung (22) erstrecken, vorzugsweise parallel zueinander,
   - sich die Langlöcher in Längsrichtung (22) erstrecken
   - die Langlöcher in Querrichtung (24) zueinander beabstandet angeordnet sind und
   - je zwei zueinander in Querrichtung (24) beabstandete Langlöcher derart angeordnet sind, dass die Bodenplatte (40) in vorbestimmten Montageposition (A-C) an der Montageplatte (18) montierbar ist, vorzugsweise wobei
   - die vorbestimmten Montagepositionen (A-C) die Bodenplatte (40) in verschiedenen Querrichtungen (24) zur Montageplatte (18) anordnen, vorzugsweise wobei die Bodenplatte (40) in den vorbestimmten Montagepositionen (A-C) unterschiedliche, in Querrichtung (24) gemessene Abstände zum Isofix-Befestigungsabschnitt (14) aufweist.
6. Befestigungsvorrichtung (56) nach einem der vorhergehenden Ansprüche, wobei die Montageplatte (18) und die Bodenplatte (40) mittels einer einzigen Schraube lösbar miteinander verbunden sind.
7. Befestigungsvorrichtung (56) nach Aspekt 6, wobei die Schraube einen Durchmesser in einem Bereich von 4,5 cm bis 15 cm, weiter vorzugsweise 7 cm bis 12 cm, besonders bevorzugt 9 cm bis 11 cm, aufweist, und/oder die Schraube eine Tellerschraube ist.
8. Befestigungsvorrichtung (56) nach einem der vorhergehenden Ansprüche, wobei
   - die Montageplatte (18) eine sich von der Montagefläche (20) erstreckende, vorzugsweise mittig angeordnete, Gewindestange (30) aufweist, die sich im montierten Zustand von Bodenplatte (40) und Montageplatte (18) durch eine in der Bodenplatte (40) vorhandene Bohrung erstreckt, und
   - die Befestigungsvorrichtung (56) eine Mutter, bevorzugt Tellermutter (26), aufweist, die auf die sich durch die Bohrung erstreckende Gewindestange (30) aufschraubbar ist zur Befestigung der Bodenplatte (40) an der Montageplatte (18.)
9. Befestigungsvorrichtung (56) nach Aspekt 8 in Kombination mit Aspekt 5, wobei
   - die Bohrung für die Gewindestange (30) als Gewindestangenlangloch (52) ausgebildet ist, in der die Gewindestange (30) verschiebbar geführt ist, vorzugsweise wobei sich das Gewindestangenlangloch (50) in Querrichtung (24) erstreckt und sich die Stege (28) und/oder Streben in Längsrichtung (22) erstrecken.
10. Befestigungsvorrichtung (56) nach einem der vorhergehenden Ansprüche, wobei die Isofix-Platte (12) und die Montageplatte (18) aus einem metallischen Werkstoff hergestellt sind und die Bodenplatte (40) aus einem nicht-metallischen Werkstoff, vorzugsweise aus einem Holzwerkstoff und/oder Holzfaserwerkstoff, weiter vorzugsweise als MDF-Platte, hergestellt ist.
11. Befestigungsvorrichtung (56) nach einem der vorhergehenden Ansprüche, wobei die Bodenplatte (40) einen Gurtbefestigungsabschnitt (52) zum Befestigen eines Gurtes (68), bevorzugt eines Haustiergurtes, aufweist.
12. Befestigungsvorrichtung (56) nach Aspekt 11, wobei der Gurtbefestigungsabschnitt (52) ein oder mehrere in der Bodenplatte (40) ausgebildete Gurtausnehmungen aufweist, durch die der Gurt (68), bevorzugt Haustiergurt, durchführbar ist, vorzugsweise wobei
   - der Gurt (68) ein erstes Ende (70) und ein zweites Ende (74) aufweist, das erste Ende (70) durch die ein oder mehrere Gurtausnehmungen durchführbar ist und ein Schlaufe (72) aufweist, das zweite Ende (74) durch die Schlaufe (72) des ersten Endes (70) durchführbar ist und das zweite Ende (74) einen Befestigungsabschnitt, beispielsweise für einen Karabiner, aufweist, der zum lösbaren Befestigen eines in der Transportbox (58) angeordneten Ladeguts, bevorzugt eines Haustiers, ausgebildet ist, oder
   - der Gurt (68) in erstes Ende (70) und ein zweites Ende (74) aufweist, das erste Ende (70) ein durch die mindestens eine oder mehrere Gurtausnehmungen durchführbares Gurthalteelement (76) aufweist, das in einer ersten Stellung durch die Gurtausnehmung durchführbar ist und in einer zweiten Stellung derart an der Bodenplatte anliegt, dass der Gurt (68) mittels des Gurthalteelements (76) an der Bodenplatte (40) gehaltert ist, und das zweite Ende (74) einen Befestigungsabschnitt, beispielsweise für einen Karabiner, aufweist, der zum lösbaren Befestigen eines in der Transportbox (58) angeordneten Ladeguts, bevorzugt eines Haustiers, ausgebildet ist.
13. Befestigungsvorrichtung (56) nach Aspekt 12, wobei die ein oder mehreren Gurtausnehmungen derart angeordnet sind, dass der Gurt (68) an einem linken oder rechten Randbereich der Bodenplatte (40) anbringbar ist.
14. Befestigungsvorrichtung (56) nach einem der vorhergehenden Ansprüche, wobei die Isofix-Platte (12) einen Isofix-Lösemechanismus (16) aufweist, vorzugsweise wobei der Isofix-Lösemechanismus (16) durch einen seitlich an der Isofix-Platte (12) angeordneten Griff auslösbar ist.
15. Befestigungsvorrichtung (56) nach Aspekt 14, wobei ein Abstand zwischen dem Isofix-Lösemechanismus (16), bevorzugt dem Griff, und einer gedachten Linie (19), die Enden (17) des Isofix-Befestigungsabschnitts (14) verbindet, in einem Bereich von 4 cm bis 15 cm, vorzugsweise 4,5 cm bis 6,5 cm, ist.
16. Befestigungsvorrichtung (56) nach einem der vorhergehenden Ansprüche, wobei die Montageplatte (18) und die Isofix-Platte (12) gelenkig miteinander verbunden sind.
17. Befestigungsvorrichtung (56) nach Aspekt 16, wobei
   - die Montagefläche (20) der Montageplatte (18) und eine Oberseite (34) der Isofix-Platte (12) in einem Winkel (36) zueinander einstellbar sind, vorzugsweise wobei der Winkel (36) in einem Bereich von 0° bis 30°, weiter bevorzugt 5° bis 20°, besonders bevorzugt 13° bis 17°, einstellbar ist, und/oder
   - die Montageplatte (18) und die Isofix-Platte (12) um eine Kippachse (32) kippbar sind, vorzugsweise wobei die Kippachse (32)
      - in einer Längserstreckungsrichtung (22) der Montagefläche (20) verläuft und/oder
      - in einer Richtung senkrecht zu einer Erstreckungsrichtung des Isofix-Befestigungsabschnitts (14) verläuft und/oder
      - derart verläuft, dass die Montagefläche (20) an eine Neigung einer Sitzfläche des Fahrzeugsitzes anpassbar ist.
18. Befestigungsvorrichtung (56) nach Aspekt 17, wobei die Grundvorrichtung (10) eine Fixiervorrichtung (38) zum Fixieren des Winkels (36) zwischen der Montageplatte (18) und der Isofix-Platte (12) aufweist, vorzugsweise wobei die Fixiervorrichtung (38) mindestens einen, vorzugsweise seitlich, an der Montageplatte (18) und/oder der Isofix-Platte (12) angeordneten Fixierhebel aufweist, vorzugsweise wobei ein Abstand zwischen der Kippachse (32) und dem Fixierhebel in einem Bereich von 2 cm bis 17 cm, vorzugsweise in einem Bereich von 7 cm bis 15 cm, weiter bevorzugt in einem Bereich von 9 cm bis 11 cm, ist.
19. Transportvorrichtung (63) zum Transportieren von Gütern, bevorzugt Haustieren, in einem Fahrzeug mit Isofix-Einrichtung, wobei die Transportvorrichtung (63) aufweist:
   - eine Transportbox (58), bevorzugt eine Transportbox (58) für Haustiere, und
   - eine Befestigungsvorrichtung (56) nach einem der vorhergehenden Ansprüche, wobei
      - die Isofix-Platte (12) mit dem Isofix-Befestigungsabschnitt (14) an der Isofix-Einrichtung befestigt ist,
      - die Bodenplatte (40) in die Transportbox (58) eingeführt und/oder eingelegt ist und
      - die Bodenplatte (40) mit der Montageplatte (18) lösbar verbunden ist.
20. Transportvorrichtung (63) nach Aspekt 19, wobei die Montageplatte (18) von einer Unterseite an die Bodenplatte (40) montiert ist, vorzugsweise wobei
   - eine Gewindestange (30) der Montageplatte (18) durch die Bodenplatte (40) hindurchragt und auf einer Oberseite der Bodenplatte (40) mit einer Tellermutter (26) lösbar verschraubt ist, oder
   - eine Tellerschraube von oben durch die Bodenplatte (40) geführt ist und mit der Montageplatte (18) lösbar verschraubt ist.
21. Transportvorrichtung (63) nach Aspekt 20, wobei die Transportbox (58) eine auf der Oberseite der Bodenplatte (40) angeordnete und entnehmbare Schaumstoffeinlage (66) aufweist, vorzugsweise wobei durch Entnehmen der Schaumstoffeinlage (66) die Tellermutter (26) zugänglich ist.
22. Transportvorrichtung (63) nach einem der Ansprüche 19 bis 21, wobei die Transportbox (58) auf der Montageplatte (18) in vorbestimmten Montagepositionen (A-C) montierbar ist, vorzugsweise wobei in den vorbestimmten Montagepositionen (A-C)
   - die Transportbox (58) verschiedene Abstände zur Isofix-Einrichtung und/oder dem Isofix-Befestigungsabschnitt (14) aufweist, und/oder
   - eine seitliche Öffnung (64) der Transportbox (58) nach links oder rechts angeordnet ist.
23. Verfahren zur Montage oder Demontage einer Transportbox (58), bevorzugt einer Transportbox (58) für Haustiere, an bzw. von einer Isofix-Einrichtung eines Fahrzeugsitzes, mittels einer Befestigungsvorrichtung (56) für die Transportbox (58), wobei die Befestigungsvorrichtung (56) aufweist:
   - eine Grundvorrichtung (10) aufweisend
      - eine Isofix-Platte (12) mit einem Isofix-Befestigungsabschnitt (14) zum Befestigen der Isofix-Platte (12) an der Isofix-Einrichtung und
      - eine mit der Isofix-Platte (12) verbundene Montageplatte (18), die eine Montagefläche 20 und mindestens einen von der Montagefläche (20) vorspringenden Rastabschnitt aufweist, und
   - eine in der Transportbox (58) angeordnete Bodenplatte (40), die mindestens eine Ausnehmung (46) zur Aufnahme des mindestens einen Rastabschnitts aufweist,
   wobei das Verfahren folgende Schritte aufweist:
   - Befestigen der Grundvorrichtung (10) am Fahrzeugsitz durch Befestigen der Isofix-Platte (12) an der Isofix-Einrichtung des Fahrzeugsitzes,
   - Anordnen der Transportbox (58) auf der Montageplatte (18) derart, dass die mindestens eine Ausnehmung (46) in der Bodenplatte (40) den mindestens einen Rastabschnitt der Montageplatte (18) aufnimmt, und
   - Befestigen der Bodenplatte (40) an der Montageplatte (18), vorzugsweise durch lösbares Verschrauben der Bodenplatte (40) mit der Montageplatte (18).
24. Verfahren nach Aspekt 23, mit dem Schritt:
   - Demontieren der Transportbox (58) von der Grundvorrichtung (10) durch Lösen der Verbindung, vorzugsweise Verschraubung, zwischen Bodenplatte (40) und Montageplatte (18).
25. Verfahren nach Aspekt 23 oder 24, wobei die Bodenplatte (40) mehrere Ausnehmungen (46) zur Aufnahme des mindestens einen Rastabschnitts aufweist und die Bodenplatte (40) derart auf der Montageplatte (18) angeordnet wird, dass die Transportbox (58) eine bevorzugte Montageposition von mehreren möglichen, vorbestimmten Montagepositionen (A-C) einnimmt, vorzugsweise wobei die vorbestimmten Montagepositionen (A-C) die Transportbox (58) in verschiedenen Abständen zur Isofix-Einrichtung anordnen und/oder eine seitliche Öffnung (64) der Transportbox (58) nach links oder rechts anordnen.

## Patentansprüche

1. Befestigungsvorrichtung (56) zum Befestigen einer Transportbox (58), bevorzugt einer Transportbox (58) für Haustiere, an einer Isofix-Einrichtung eines Fahrzeugsitzes, wobei die Befestigungsvorrichtung (58) aufweist:
- eine Grundvorrichtung (10) aufweisend
- eine Isofix-Platte (12) mit einem Isofix-Befestigungsabschnitt (14) zum Befestigen der Isofix-Platte (12) an der Isofix-Einrichtung des Fahrzeugsitzes und
- eine mit der Isofix-Platte (12) verbundene Montageplatte (18), die eine Montagefläche (20) und mindestens einen von der Montagefläche (20) vorspringenden Rastabschnitt aufweist, und
- eine in die Transportbox (58) einführbare und/oder einlegbare Bodenplatte (40), die mit der Montageplatte (18) an der Montagefläche (20) lösbar verbindbar ist, wobei die Bodenplatte (40) mindestens eine Ausnehmung (46) aufweist, die dazu ausgebildet ist, im verbundenen Zustand von Montageplatte (18) und Bodenplatte (12) den mindestens einen Rastabschnitt derart aufzunehmen, dass eine Verdrehsicherung zwischen der Bodenplatte (12) und der Montageplatte (18) vorhanden ist.

2. Befestigungsvorrichtung (56) nach Anspruch 1, wobei die Montagefläche (20) mindestens zwei Rastabschnitte aufweist und die Bodenplatte (40) mindestens zwei Ausnehmungen (46) zur Aufnahme der mindestens zwei Rastabschnitte aufweist.

3. Befestigungsvorrichtung (56) nach Anspruch 2, wobei
- die Rastabschnitte als Stege (28) und/oder Streben ausgebildet sind, die sich aus der Montagefläche (20) erheben und sich vorzugsweise parallel zueinander erstrecken, und
- die Ausnehmungen (46) in der Bodenplatte (40) als Langlöcher ausgebildet sind, in denen die Stege (28) und/oder Streben verschiebbar geführt sind, vorzugsweise wobei
- sich die Montagefläche (20) in einer Längsrichtung (22) und in einer senkrecht zur Längsrichtung (22) angeordneten Querrichtung (24) erstreckt,
- sich die Stege (28) in Längsrichtung (22) erstrecken, vorzugsweise parallel zueinander,
- sich die Langlöcher in Längsrichtung (22) erstrecken
- die Langlöcher in Querrichtung (24) zueinander beabstandet angeordnet sind und
- je zwei zueinander in Querrichtung (24) beabstandete Langlöcher derart angeordnet sind, dass die Bodenplatte (40) in vorbestimmten Montageposition (A-C) an der Montageplatte (18) montierbar ist, und
- die vorbestimmten Montagepositionen (A-C) die Bodenplatte (40) in verschiedenen Querrichtungen (24) zur Montageplatte (18) anordnen, vorzugsweise wobei die Bodenplatte (40) in den vorbestimmten Montagepositionen (A-C) unterschiedliche, in Querrichtung (24) gemessene Abstände zum Isofix-Befestigungsabschnitt (14) aufweist.

4. Befestigungsvorrichtung (56) nach einem der vorhergehenden Ansprüche, wobei die Montageplatte (18) und die Bodenplatte (40) mittels einer einzigen Schraube, beispielsweise einer Tellerschraube, und/oder mittels einer Gewindestange (30) und Tellermutter (26) lösbar miteinander verbunden sind.

5. Befestigungsvorrichtung (56) nach einem der vorhergehenden Ansprüche, wobei
- die Montageplatte (18) eine sich von der Montagefläche (20) erstreckende, vorzugsweise mittig angeordnete, Gewindestange (30) aufweist, die sich im montierten Zustand von Bodenplatte (40) und Montageplatte (18) durch eine in der Bodenplatte (40) vorhandene Bohrung erstreckt, und
- die Befestigungsvorrichtung (56) eine Mutter, bevorzugt einer Tellermutter (26), aufweist, die auf die sich durch die Bohrung erstreckende Gewindestange (30) aufschraubbar ist zur Befestigung der Bodenplatte (40) an der Montageplatte (18.)

6. Befestigungsvorrichtung (56) nach Anspruch 5 in Kombination mit Anspruch 3, wobei
- die Bohrung für die Gewindestange (30) als Gewindestangenlangloch (52) ausgebildet ist, in der die Gewindestange (30) verschiebbar geführt ist, vorzugsweise wobei sich das Gewindestangenlangloch (50) in Querrichtung (24) erstreckt und sich die Stege (28) und/oder Streben in Längsrichtung (22) erstrecken.

7. Befestigungsvorrichtung (56) nach einem der vorhergehenden Ansprüche, wobei die Bodenplatte (40) einen Gurtbefestigungsabschnitt (52) zum Befestigen eines Gurtes (68), bevorzugt eines Haustiergurtes, aufweist.

8. Befestigungsvorrichtung (56) nach Anspruch 7, wobei der Gurtbefestigungsabschnitt (52) ein oder mehrere in der Bodenplatte (40) ausgebildete Gurtausnehmungen aufweist, durch die der Gurt (68), bevorzugt Haustiergurt, durchführbar ist, vorzugsweise wobei
- der Gurt (68) ein erstes Ende (70) und ein zweites Ende (74) aufweist, das erste Ende (70) durch die ein oder mehrere Gurtausnehmungen durchführbar ist und eine Schlaufe (72) aufweist, und das zweite Ende (74) durch die Schlaufe (72) des ersten Endes (70) durchführbar ist und einen Befestigungsabschnitt, beispielsweise für einen Karabiner, aufweist, der zum lösbaren Befestigen eines in der Transportbox (58) angeordneten Ladeguts, bevorzugt eines Haustiers, ausgebildet ist, und/oder
- der Gurt (68) in erstes Ende (70) und ein zweites Ende (74) aufweist, das erste Ende (70) ein durch die mindestens eine oder mehrere Gurtausnehmungen durchführbares Gurthalteelement (76) aufweist, das in einer ersten Stellung durch die Gurtausnehmung durchführbar ist und in einer zweiten Stellung derart an der Bodenplatte anliegt, dass der Gurt (68) mittels des Gurthalteelements (76) an der Bodenplatte (40) gehaltert ist, und das zweite Ende (74) einen Befestigungsabschnitt, beispielsweise für einen Karabiner, aufweist, der zum lösbaren Befestigen eines in der Transportbox (58) angeordneten Ladeguts, bevorzugt eines Haustiers, ausgebildet ist, und/oder
- die ein oder mehreren Gurtausnehmungen derart angeordnet sind, dass der Gurt (68) an einem linken oder rechten Randbereich der Bodenplatte (40) anbringbar ist.

9. Befestigungsvorrichtung (56) nach einem der vorhergehenden Ansprüche, wobei die Isofix-Platte (12) einen Isofix-Lösemechanismus (16) aufweist, vorzugsweise wobei der Isofix-Lösemechanismus (16) durch einen seitlich an der Isofix-Platte (12) angeordneten Griff auslösbar ist.

10. Befestigungsvorrichtung (56) nach einem der vorhergehenden Ansprüche, wobei die Montageplatte (18) und die Isofix-Platte (12) gelenkig miteinander verbunden sind.

11. Befestigungsvorrichtung (56) nach Anspruch 10, wobei
- die Montagefläche (20) der Montageplatte (18) und eine Oberseite (34) der Isofix-Platte (12) in einem Winkel (36) zueinander einstellbar sind, vorzugsweise wobei der Winkel (36) in einem Bereich von 0° bis 30°, weiter bevorzugt 5° bis 20°, besonders bevorzugt 13° bis 17°, einstellbar ist, und/oder
- die Montageplatte (18) und die Isofix-Platte (12) um eine Kippachse (32) kippbar sind, vorzugsweise wobei die Kippachse (32)
- in einer Längserstreckungsrichtung (22) der Montagefläche (20) verläuft und/oder
- in einer Richtung senkrecht zu einer Erstreckungsrichtung des Isofix-Befestigungsabschnitts (14) verläuft und/oder
- derart verläuft, dass die Montagefläche (20) an eine Neigung einer Sitzfläche des Fahrzeugsitzes anpassbar ist.

12. Transportvorrichtung (63) zum Transportieren von Gütern, bevorzugt Haustieren, in einem Fahrzeug mit Isofix-Einrichtung, wobei die Transportvorrichtung (63) aufweist:
- eine Transportbox (58), bevorzugt eine Transportbox (58) für Haustiere, und
- eine Befestigungsvorrichtung (56) nach einem der vorhergehenden Ansprüche, wobei
- die Isofix-Platte (12) mit dem Isofix-Befestigungsabschnitt (14) an der Isofix-Einrichtung befestigt ist,
- die Bodenplatte (40) in die Transportbox (58) eingeführt und/oder eingelegt ist und
- die Bodenplatte (40) mit der Montageplatte (18) lösbar verbunden ist.

13. Transportvorrichtung (63) nach Anspruch 12, wobei
- die Montageplatte (18) von einer Unterseite an die Bodenplatte (40) montiert ist, wobei vorzugsweise eine Gewindestange (30) der Montageplatte (18) durch die Bodenplatte (40) hindurchragt und auf einer Oberseite der Bodenplatte (40) mit einer Tellermutter (26) lösbar verschraubt ist, und/oder
- die Transportbox (58) eine auf der Oberseite der Bodenplatte (40) angeordnete und entnehmbare Schaumstoffeinlage (66) aufweist, vorzugsweise wobei durch Entnehmen der Schaumstoffeinlage (66) die lösbare Verschraubung, vorzugsweise die Tellermutter (26), zugänglich ist, und/oder
- die Transportbox (58) auf der Montageplatte (18) in vorbestimmten Montagepositionen (A-C) montierbar ist, vorzugsweise wobei in den vorbestimmten Montagepositionen (A-C)
- die Transportbox (58) verschiedene Abstände zur Isofix-Einrichtung und/oder dem Isofix-Befestigungsabschnitt (14) aufweist, und/oder
- eine seitliche Öffnung (64) der Transportbox (58) nach links oder rechts angeordnet ist.

14. Verfahren zur Montage oder Demontage einer Transportbox (58), bevorzugt einer Transportbox (58) für Haustiere, an bzw. von einer Isofix-Einrichtung eines Fahrzeugsitzes, mittels einer Befestigungsvorrichtung (56) für die Transportbox (58), wobei die Befestigungsvorrichtung (56) aufweist:
- eine Grundvorrichtung (10) aufweisend
- eine Isofix-Platte (12) mit einem Isofix-Befestigungsabschnitt (14) zum Befestigen der Isofix-Platte (12) an der Isofix-Einrichtung und
- eine mit der Isofix-Platte (12) verbundene Montageplatte (18), die eine Montagefläche 20 und mindestens einen von der Montagefläche (20) vorspringenden Rastabschnitt aufweist, und
- eine in der Transportbox (58) angeordnete Bodenplatte (40), die mindestens eine Ausnehmung (46) zur Aufnahme des mindestens einen Rastabschnitts aufweist,
wobei das Verfahren folgende Schritte aufweist:
- Befestigen der Grundvorrichtung (10) am Fahrzeugsitz durch Befestigen der Isofix-Platte (12) an der Isofix-Einrichtung des Fahrzeugsitzes,
- Anordnen der Transportbox (58) auf der Montageplatte (18) derart, dass die mindestens eine Ausnehmung (46) in der Bodenplatte (40) den mindestens einen Rastabschnitt der Montageplatte (18) aufnimmt, und
- Befestigen der Bodenplatte (40) an der Montageplatte (18), vorzugsweise durch lösbares Verschrauben der Bodenplatte (40) mit der Montageplatte (18).

15. Verfahren nach Anspruch 14, wobei
- die Bodenplatte (40) mehrere Ausnehmungen (46) zur Aufnahme des mindestens einen Rastabschnitts aufweist und die Bodenplatte (40) derart auf der Montageplatte (18) angeordnet wird, dass die Transportbox (58) eine bevorzugte Montageposition von mehreren möglichen, vorbestimmten Montagepositionen (A-C) einnimmt, vorzugsweise wobei die vorbestimmten Montagepositionen (A-C) die Transportbox (58) in verschiedenen Abständen zur Isofix-Einrichtung anordnen und/oder eine seitliche Öffnung (64) der Transportbox (58) nach links oder rechts anordnen, und/oder
- das Verfahren den Schritt aufweist: Demontieren der Transportbox (58) von der Grundvorrichtung (10) durch Lösen der Verbindung, vorzugsweise Verschraubung, zwischen Bodenplatte (40) und Montageplatte (18).
